Europäisches Patentamt

(19) European Patent Office   (11) Publication number: **0 111 465**

Office européen des brevets   **B1**

(12) **EUROPEAN PATENT SPECIFICATION**

(45) Date of publication of patent specification: **18.03.87**   (51) Int. Cl.⁴: **B 29 C 39/18, B 32 B 5/00**

(21) Application number: **83850301.9**

(22) Date of filing: **09.11.83**

(54) A method of coating a fibre mat with a heat resistant foam material.

(30) Priority: **26.11.82 SE 8206774**

(43) Date of publication of application:
**20.06.84 Bulletin 84/25**

(45) Publication of the grant of the patent:
**18.03.87 Bulletin 87/12**

(84) Designated Contracting States:
**BE CH DE FR GB IT LI NL SE**

(56) References cited:
**EP-A-0 024 929**
**DE-A-1 619 240**
**US-A-3 240 655**
**US-A-4 169 915**

(73) Proprietor: **Studsvik FireSeal AB
S-611 82 Nyköping (SE)**

(72) Inventor: **Ohlsson, Bo
Hästens väg 3
S-611 57 Nyköping (SE)**
Inventor: **Thunström, Lars Åke
Vitriskestigen 6
S-611 63 Nyköping (SE)**

(74) Representative: **Burman, Tore et al
Bergling & Sundbergh AB P.O. Box 7645
S-103 94 Stockholm (SE)**

Courier Press, Leamington Spa, England.

# Description

## Technical Field

The invention relates to a method of coating a fibre mat, preferably a mineral fibre mat, with a foam material, wherein a foamable liquid composition of materials, preferably of the silicone type is foamed in contact with the mat (US—A—4169915).

## Background Art

Mineral fibre mats used for insulation purposes in buildings are to a certain extent plastic so that under the action of gravity, or after compression, they are not entirely capable of maintaining or returning to their original shape. Furthermore, such mats usually contain inflammable binding agents and are permeable to water and gas, so that they are not suitable for fire protection purposes.

One object of the invention is therefore to propose a method of coating of the kind mentioned hereinbefore, resulting in a product surmounting the mentioned disadvantages and thus being utilizable for structures which are to be fire-resistant.

It is known per se, e.g. from the Danish patent 107 445, to produce a composite product including a carrier to which is applied a foamed material, but the known product does not eliminate the known disadvantages, and neither does the prior art afford any well-adapted technique for producing a product which can eliminate the mentioned disadvantages.

The present method is based on the technique revealed in US—A—4169915, which document discloses the features of the pre-characterising part of the present claim 1.

## Characterisation of the Invention

A method of coating a fibre mat, preferably a mineral fibre mat, with a foam material, wherein a foamable liquid composition of materials, preferably of the silicone type is foamed in contact with the mat (US—A—4169915) characterized in that the foamable composition is introduced into a mould, that the fibre mat is selected such that it has a density which is lower than that of the unfoamed composition, that the mat is laid on the unfoamed composition in the mould, that the mat is brought to a desired floating position in the unfoamed composition, and that the composition is allowed to foam to the intended extent and to cure afterwards, the composite product then being removed. The foamable composition of materials is preferably a silicon composition of the type which is marketed, e.g. by Dow Corning Company with the designation 36548 RTV Silicone Foam.

The method can be carried out in a batch production process, the mould having substantially the same free surface as the fibre mat, such that the side edges of the mould may be adapted for guiding the rise of the mat when the composition foams. The composition may be adapted for starting to foam after a predetermined time period after pouring into the mould.

The inventive method may, of course, be performed continuously, such that the mould mentioned can be implemented as a trough of which the bottom and possibly the side walls as well are formed by conveyor belts, the composition being continuously supplied at a position along the trough, and the mineral fibre mat continuously laid on the poured composition downstream of the pouring location. In such a case the mould should have a length such that the mineral fibre mat has time to assume a position of floating equilibrium in the composition, and the composition has time to foam and cure before the composite product leaves the mould.

In accordance with the invention, it is thus possible to regulate the penetration of the foam into the fibre mat by selecting suitable density and thickness of the fibre mat and also selecting a suitable density for the foam composition, and by furthermore allowing the mat to assume its floating equilibrium position on the composition before the latter is caused to foam. The thickness of the foam layer from the surface of the mat can be adjusted by selected layer thickness of the unfoamed composition in the mould, taking into account the degree of foaming of the composition.

With the aid of the invention there is provided a product with uniform foam deposition and uniform penetration of foam into the mineral fibre mat, while it is also possible simply to alter the products by altering the foaming degree and density of the foam composition and by alteration of the thickness and density of the fibre mat.

The density of the foam is uniform and predetermined, so that the mat can be accurately adjusted to a given prerequisite while minimizing the quantity of relatively expensive foam composition. The elasticity of the foamed layer also makes it possible to arrange fire-proof leadsthrough for pipes, cables etc. by simply forcing a hole through the product through its chief surfaces, taking the pipe, etc. through the hole and afterwards liberating the product so that the wall of the hole elastically returns into sealing contact with the pipes etc., e.g. in accordance with the technique revealed in the Swedish patent 7809749—0. It will thus be understood that the product is not only stable as to its shape while affording fire resistance, sound damping etc., but after installation it also allows simple fire- and sound-proof laying of pipes etc. subsequent to its installation.

By means of the invention the need of trimming the edges of the product can also be reduced or avoided.

In the product the foamed layer is made dimension stable so as to be able to carry the fibre mat without tendency for the foamed layer to be deformed in its plane by the weight of the fibre mat when the product plane is generally vertical.

The fibre mat is held extended or straightened by the foam layer so that the tendency for the fibre mat to collapse in its plane when oriented vertically, is substantially reduced.

In a generally vertical wall insulated by joined products according to the invention, the fibre mat joints are thus held closed by the straightening or stabilizing property of the foamed layers.

The fibre mat can therefore be of relatively low density, whereby its heat insulation capacity increases and its mass and cost decreases.

In the product the foamed layer provides fire resistance and the fibre mat adds, to a relatively low cost, heat and sound insulation to the foamed layer.

Hereby the foamed layer can be made with a thickness corresponding to the desired fire resistance for the product, whereby the foam material costs are minimized.

Further, the uniform foam layer thickness provided by the process minimizes the necessary safety margins for the required foamed layer thickness on top of the fibre mat. The foam penetration into the fibre mat is chosen to ensure a suitable and heat resistant anchoring of the fibre mat to the foamed layer, and further to constitute a fire and gas resistance safety margin.

The product is intended to be oriented with the foamed layer toward the fire risk area.

The invention is defined in the appended claims.

The invention will now be described in detail in the form of an example, and with reference to the accompanying drawing.

Drawing

The Figs. 1A—1D are schematical sections through a mould illustrating the consecutive steps of the process.

Fig. 2 schematically illustrates an apparatus for performing the method continuously.

Embodiment Example

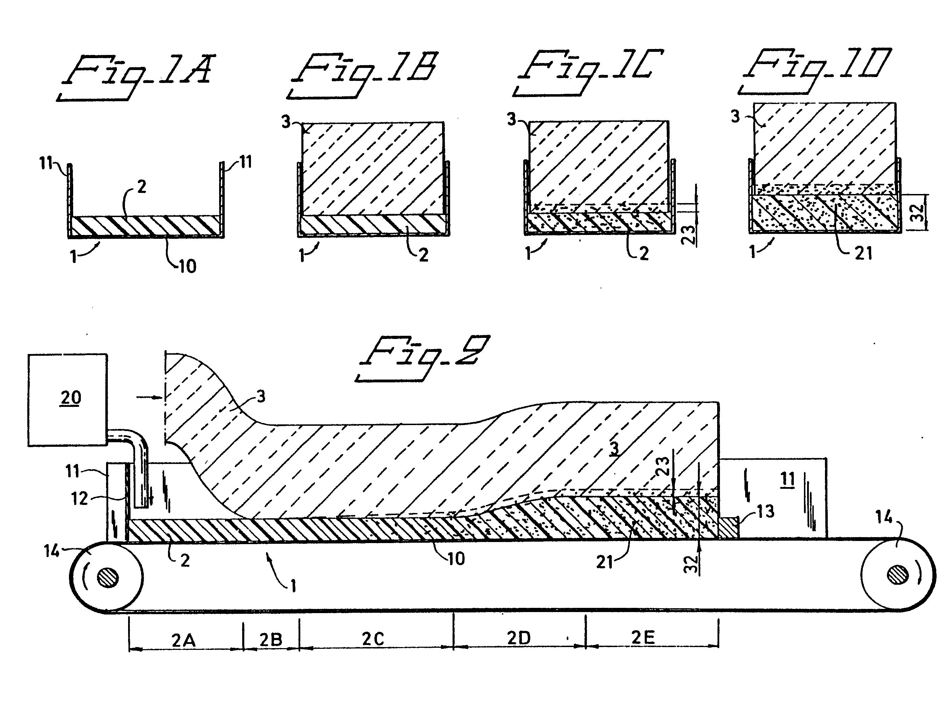

Fig. 1 illustrates a mould 1 including a flat horizontal bottom 10 and vertical walls 11, in which a foam composition 2 is poured to a predetermined height. Fig. 1B illustrates how a mineral fibre mat 3 is placed in the mould 1 on the surface of the composition 2, the mat 3 having a format closely corresponding to the opening of the mould 1. The mat 3 is allowed to assume a position of floating equilibrium on the composition 2, such that the composition penetrates a distance 23 into the mat 3, as will be seen from Fig. 1C. The composition is adapted such as to subsequently foam up to form a foam 21 with a foam layer thickness 32 from the lower surface of the mat 3, as will be seen from Fig. 1D, the walls of the mould 1 guiding the mat 3 during its rise while the composition foams. After foaming the composition is allowed to set or cure, subsequent to which the composite product can be removed from the mould.

The foam composition 2 may be of the type utilized by Studsvik FireSeal AB for providing leads-through, and which is marketed by Dow Corning Company under the designation 36548 RTV Silicone Foam. Such a composition is of the silicone type and is substantially gas- and watertight in its foamed condition, and furthermore it has excellent fire resistance. The mineral fibre layer 3 in the product constitutes a carrier for a comparatively thin coating of silicone foam 21, as well as contributing to making the product sound-dampening and easily suited to conventional building systems, the product also being easily adaptable and allowing simple sound-dampening and fire protection for leads-through. The product produced by the method has also excellent heat insulation capacity, partly due to the heat insulation properties of the foam 21 and mat 3, and partly due to the foam layer 21 forming a seal for one chief surface of the mineral fibre mat 3.

Fig. 2 illustrates an endless belt 10 running over two pulleys 14, of which at least one is driven for rotation. The belt 10 constitutes the bottom of a continuous mould. The mould is defined by two parallel, vertical side walls 11, which may also be formed by endless belts going all the way round. The mould 1 also has a rear end wall 12 which may be fixed. The foamable composition 2 is poured from a pouring apparatus 20 and is introduced into the mould 1 adjacent its rear wall 12, and is allowed to flow out in the mould to form a uniform layer. A rail or barrier 13, schematically illustrated, may be laid out transverse the travelling direction of belt 10 when starting up manufacture, for subsequent removal as soon as a uniform layer of the composition 2 has been established, whereon a web of mineral fibre mat 3 is laid on the surface of the composition 2, and the mat 3 allowed to assume a position of floating equilibrium during travel along the mould, whereafter the composition is allowed to foam by reason of its composition such that the composition 2 foams up to the layer 21 in the righthand portion of Fig. 2, a composite product being obtained, consisting of the foam layer 21, the fibre mat 3 and a boundary, binding zone 23 in between these, the foam material having penetrated into, and foamed out in the lower portion of the mat 3. The foam is then allowed to cure or set, subsequent to which the composite product can be removed for further processing, e.g. cutting transverse its length to form product slabs. The method steps illustrated in Figs. 1A—1D are achieved in the sections 2A—2D in Fig. 2, in which the section 2E illustrates the length or time period, required to allow the product to cure or set.

Claims

1. A method of coating a fibre mat (3), preferably a mineral fibre mat, with a foam material (21), wherein a foamable liquid composition (2) of materials, preferably of the silicone type is foamed in contact with the mat characterized in that the foamable composition is introduced into a mould (1), in that the fibre mat (3) is selected such that it has a density lower than that of the unfoamed composition (2), in that the mat (3) is laid on the unfoamed composition in the mould (1), in that the mat (3) is caused to assume a desired floating position in the unfoamed composition, and in that the composition is subsequently allowed to foam up to the intended extent, then to set or cure, after which the composite product is removed from the mould (1).

2. Method as claimed in claim 1, characterized in that the mould has substantially vertical side edges, and that the dimensions of the mat are selected such as substantially to correspond to the dimensions of the mould for the side edges of the form to guide the rise of the mat (3) when the composition (2) foams.

3. Method as claimed in claim 1 or 2, characterized in that the composition is disposed for beginning to foam after a predetermined time period after pouring into the mould, thus to allow the mat to assume a position of floating equilibrium in the composition before the latter begins to foam.

4. Method as claimed in any of the claims 1—3, characterized in that the penetration of the composition in the mat is regulated by suitable selection of the density and thickness of the mat in relation to the density of the composition.

5. Method as claimed in any of claims 1—4, characterized in that the thickness of the foam layer (21) from the surface of the mat (3) is regulated by suitable selection of the thickness of the unfoamed composition in the mould, taking into account the degree of foaming set for the composition (2).

6. Method as claimed in any of claims 1—5, characterized in that the rising movement of the mat under the action of foaming by the composition is limited for controlling the degree of foaming of the composition.

## Patentansprüche

1. Verfahren zum Beschichten einer Fasermatte (3), vorzugsweise einer Mineralfasermatte, mit Schaummaterial (21), wobei eine schäumbare flüssige Zusammensetzung (2) von Materialien, vorzugsweise vom Silikontyp, in Berührung mit der Matte geschäumt wird, dadurch gekennzeichnet, daß die schäumbare Zusammensetzung in eine Form (1) eingeführt wird, daß die Fasermatte (3) derart ausgewählt wird, daß sie eine Dichte hat, die kleiner als die der ungeschäumten Zusammensetzung (2) ist, daß die Matte (3) auf die ungeschäumte Zusammensetzung in der Form (1) gelegt wird, daß die Matte (3) veranlaßt wird, eine gewünschte Fließposition in der ungeschäumten Zusammensetzung anzunehmen, und daß danach der Zusammensetzung die Möglichkeit gegeben wird, sich auf das beabsichtigte Maß auszuschäumen, dann zu erstarren oder auszuhärten, wonach das Verbundstoffprodukt aus der Form (1) entfernt wird.

2. Verfahren nach Anspruch 1, dadurch gekennzeichnet, daß die Form im wesentlichen vertikale Seitenkanten hat und daß die Abmaße der Matte derart ausgewählt sind, daß sie im wesentlichen den Abmaßen der Form für die Seitenkanten der Form entsprechen, um das Aufsteigen der Matte (3) zu führen, wenn die Zusammensetzung (2) schäumt.

3. Verfahren nach Anspruch 1 oder 2, dadurch gekennzeichnet, daß die Zusammensetzung für das Beginnen des Schäumens nach einer vorbestimmten Zeit nach dem Eingießen in die Form angeordnet wird, wodurch die Matte die Möglichkeit hat, eine Position schwimmender Ruhelage in der Zusammensetzung anzunehmen, bevor letztere zu schäumen beginnt.

4. Verfahren nach einem der Ansprüche 1 bis 3, dadurch gekennzeichnet, daß die Eindringung der Zusammensetzung in der Matte durch geeignete Auswahl der Dichte und Dicke der Matte bezüglich der Dichte der Zusammensetzung reguliert wird.

5. Verfahren nach einem der Ansprüche 1 bis 4, dadurch gekennzeichnet, daß die Dicke der Schaumschicht (21) aus der Oberfläche der Matte (3) durch geeignete Auswahl der Dicke der ungeschäumten Zusammensetzung in der Form reguliert wird, wobei der für die Zusammensetzung (2) eingestellte Schäumungsgrad in Rechnung gezogen wird.

6. Verfahren nach einem der Ansprüche 1 bis 5, dadurch gekennzeichnet, daß die Aufsteigebewegung der Matte unter der Wirkung des Schäumens durch die Zusammensetzung für das Steuern des Schäumungsgrades der Zusammensetzung begrenzt wird.

## Revendications

1. Procédé de revêtement d'un mat fibreux (3), de préférence un mat de fibres minérales, avec un matériau de mousse (21), dans lequel on fait mousser une composition liquide moussable (2) de matériaux, de préférence du type silicone, au contact du mat, caractérisé en ce que la composition moussable est introduite dans un moule (1), en ce que le mat fibreux (3) est choisi de manière à avoir une masse volumique qui soit inférieure à celle de la composition non moussée (2), en ce que le mat (3) est étalé sur la composition non moussée dans le moule (1), en ce que le mat (3) est amené en une position flottante souhaitée dans la composition non moussée, et en ce qu'on laisse ensuite mousser la composition jusqu'au degré souhaité et on la laisse ensuite durcir, après quoi le produit composite est retiré du moule (1).

2. Procédé selon la revendication 1, caractérisé en ce que le moule a des bords latéraux essentiellement verticaux et en ce que les dimensions du mat sont choisis de manière à correspondre essentiellement aux dimensions du moule pour que les bords latéraux du moule guident l'élévation du mat (3) lorsque la composition (2) mousse.

3. Procédé selon la revendication 1 ou 2, caractérisé en ce que la composition est disposée pour commencer à mousser après une période de temps prédéterminée après avoir été versée dans le moule, ce qui permet au mat de prendre une position d'équilibre en flottation dans la composition avant que cette dernière ne commence à mousser.

4. Procédé selon l'une quelconque des revendications 1 à 3, caractérisé en ce que la pénétration de la composition dans le mat est réglée par un choix convenable de la masse volumique et de l'épaisseur du mat par rapport à la masse volumique de la composition.

5. Procédé selon l'une quelconque des revendications 1 à 4, caractérisé en ce que l'épaisseur de la couche de mousse (21) depuis la surface du mat (3) est réglée par un choix convenable de l'épaisseur de la composition non moussée dans le moule, en tenant compte du degré de moussage choisi pour la composition (2).

6. Procédé selon l'une quelconque des revendications 1 à 5, caractérisé en ce que le mouvement d'élévation du mat sous l'action du moussage de la composition est limité pour régler le degré de moussage de la composition.

Fig.1A  Fig.1B  Fig.1C  Fig.1D

Fig.2